# EUROPÄISCHE PATENTSCHRIFT

(11) **EP 3 014 117 B1**
(45) Veröffentlichungstag und Bekanntmachung des Hinweises auf die Patenterteilung: **07.03.2018**
(21) Anmeldenummer: 14734763.7
(22) Anmeldetag: 18.06.2014
(51) Int. Cl.: F03D 13/20, B66C 1/10, F03D 1/00, B66C 23/20, F03D 13/10, F03D 13/40, F03D 80/50

(54) **TRANSFORMATORWECHSELSYSTEM**
TRANSFORMER REPLACEMENT SYSTEM
SYSTÈME DE REMPLACEMENT DE TRANSFORMATEURS

(30) Priorität: 27.06.2013 DE 102013212475
(43) Veröffentlichungstag der Anmeldung: 04.05.2016
(73) Patentinhaber: Senvion GmbH, 22297 Hamburg (DE)
(72) Erfinder: MAASSEN, Frank, 25557 Bornholt (DE); LÜTJEN, Jan, 25585 Lütjenwestedt (DE); TREDE, Alf, 25885 Immenstedt (DE)
(74) Vertreter: Glawe, Delfs, Moll
(86) Internationale Anmeldenummer: PCT/EP2014/062859
(87) Internationale Veröffentlichungsnummer: WO 2014/206840

(56) Entgegenhaltungen:
- EP-A1- 2 386 515
- EP-A2- 1 101 934
- US-A1- 2010 011 575

## Beschreibung

Die Erfindung betrifft ein Verfahren zum Lastentransport in einem Turm einer Windenergieanlage, wobei der Turm eine Wandöffnung zur Durchführung einer Last umfasst.

Windenergieanlagen weisen Transformatoren auf, die die von der Windenergieanlage erzeugte Leistung transformieren, um sie beispielsweise in Hochspannungsnetze einzuspeisen. Die Transformatoren gehören zu den größten und schwersten Bauteilen, die in Windenergieanlagen eingebaut werden. Aus statischen Gründen werden sie häufig im Fuß des Windenergieanlagenturms direkt auf dem Fundament angeordnet. Der Eingang in den Windenergieanlagenturm befindet sich dabei in der Regel ein Stockwerk über dem Fundament.

Im Stand der Technik ist es bekannt, für Wartungs- und Reparaturarbeiten am Transformator Einzelteile auszutauschen. Falls der ganze Transformator ausgetauscht werden muss, wird er in handhabbare Einzelteile zerlegt und aus dem Turm entfernt. Der neue Transformator wird in Einzelteilen in den Turm eingebracht und im Fuß des Windenergieanlagenturms zusammengebaut. Der Zusammenbau des Transformators kann allerdings nicht unter den gleichen Bedingungen erfolgen wie in der dafür vorgesehenen Montagehalle des Herstellers. Durch diese nachteiligen Bedingungen erreicht der Transformator nicht die Güte des Auslieferungszustandes, so dass es zu erhöhten Wirkungsgradverlusten bei der Leistungsumsetzung kommen kann.

Aus der EP 2 386 515 A1 ist es bekannt, in einem Turm einer Windenergieanlage an der Turminnenwand stationär einen auskragenden Vorsprung als Abstützvorrichtung anzubringen, und zwar an einer Position gegenüber der Wandöffnung in der Höhe ihres oberen Rands. Die Oberseite dieses Vorsprungs kann bei Bedarf als Auflage für eine Führungsschiene eines Lasttragesystems fungieren. Nachteilig daran ist, dass die Turmwandung für die Abstützvorrichtung an der entsprechenden Stelle aufgedoppelt werden muss, weil es ansonsten zu einer unzulässigen Schwächung der Turmwandung kommt. Ferner ist es bei vielen Windenergieanlagentypen gar nicht möglich, die Führungsschiene bis zur gegenüberliegenden Turmwand durchzuschieben, weil Einbauten, bspw. Schaltschränke, dort angeordnet sind und somit im Weg stehen.

Der Erfindung liegt die Aufgabe zugrunde ein Verfahren zu schaffen, das die oben genannten Nachteile vermeidet.

Die erfindungsgemäße Lösung liegt in den Merkmalen der unabhängigen Ansprüche. Vorteilhafte Weiterbildungen sind Gegenstand der abhängigen Ansprüche.

Erfindungsgemäß ist ein Verfahren zum Lastentransport in einem Turm einer Windenergieanlage mittels einer Führungsschiene vorgesehen, wobei der Turm eine Wandöffnung zur Durchführung einer Last umfasst, umfassend folgende Schritte: lösbares Anbringen von mindestens einer Befestigungseinrichtung im Inneren des Turms; Anhängen einer Haltevorrichtung im Inneren des Turms an die mindestens eine lösbar angeordnete Befestigungseinrichtung; Anordnen der Führungsschiene in der Wandöffnung, wobei eine Hälfte der Führungsschiene innerhalb des Turms von einer Haltevorrichtung gehalten wird und die andere Hälfte der Führungsschiene außerhalb des Turms von einer Tragvorrichtung gehalten wird; Befestigen der Last an der Führungsschiene auf einer Seite der Wandöffnung mittels mindestens eines entlang der Führungsschiene beweglichen Führungswagens; Transportieren der Last auf eine gegenüberliegende Seite der Wandöffnung durch Bewegen des Führungswagens.

Nachfolgend seien zunächst einige Begriffe näher erläutert:

Unter einer Hälfte einer Führungsschiene wird einer von zwei Bereichen der Führungsschiene verstanden. Dabei sind die Hälften nicht zwingend als gleich groß zu verstehen. Die beiden Hälften können damit zwei verschieden große Bereiche der Führungsschiene bezeichnen. Insgesamt überdecken beide Bereiche die komplette Führungsschiene.

Unter einer gegenüberliegenden Seite einer Wandöffnung wird die Seite der Wandöffnung verstanden, auf der die Last nicht angeordnet ist. Befindet sich die Last innerhalb des Windenergieanlagenturms, so ist unter der gegenüberliegenden Seite der Wandöffnung die Seite außerhalb des Windenergieanlagenturms zu verstehen. Befindet sich die Last außerhalb des Windenergieanlagenturms, so ist unter der gegenüberliegenden Seite der Wandöffnung das Innere des Windenergieanlagenturms zu verstehen.

Die Erfindung hat erkannt, dass mittels einer in eine Wandöffnung des Windenergieanlagenturms eingeführten Führungsschiene eine Last ohne Demontage durch die Wandöffnung des Turms transportiert werden kann. Die Führungsschiene wird dazu durch die Wandöffnung geführt und im Turminneren sowie außerhalb des Turms gehalten. Die zu transportierende Last wird auf einer Seite der Führungsschiene an einen Führungswagen angehängt und mit dem Führungswagen entlang der Führungsschiene durch die Wandöffnung verschoben. Nach dem Verschieben wird die Last an Ihren Bestimmungsort transportiert und ggf. fixiert. Auf diese Weise ermöglicht die Erfindung den Transport eines Transformators als Ganzes aus dem Turminneren heraus oder in das Turminnere hinein. Der Austausch eines Transformators wird damit vereinfacht. Es ist nicht erforderlich, die auszutauschenden Transformatoren in Einzelteile zu zerlegen, so dass der ausgetauschte Transformator in der Montagehalle des Herstellers zusammengebaut werden kann. Damit wird eine Erhöhung von Wirkungsgradverlusten nach dem Austausch der Transformatoren vermieden.

Weiter ist die Erfindung universell einsetzbar und verlangt keine aufwendige Vorrüstung mit stationären Abstützvorrichtungen im Turm der Windenergieanlage. Die Erfindung ist auch unempfindlich gegenüber Einbauten in der Windenergieanlage gegenüberliegend der Wandöffnung. Sie eignet sich somit für nahezu alle Windenergieanlagentypen, ohne auf Vorrüstungen angewiesen zu sein. Das ist im Stand der Technik ohne Beispiel.

Vorteilhafterweise wird die Haltevorrichtung vor dem Anordnen der Führungsschiene in der Wandöffnung montiert. Damit wird gewährleistet, dass die Führungsschiene direkt nach dem Anordnen in der Wandöffnung im Turminneren befestigt und gehalten wird. Schäden an den Turmeinbauten durch eine unkontrollierte Schwingungsbewegung der Führungsschiene werden damit vermieden.

Bevorzugt weist die Haltevorrichtung im Turm ein Haltemodul mit einem Kabelelement auf, wobei das Kabelelement längenveränderlich ausgebildet ist. Das Haltemodul ermöglicht die einfache Anpassung der vertikalen Ausrichtung der Führungsschiene. Damit können die Neigung und die Höhe der Führungsschiene schnell und unkompliziert auf die gewünschten Werte angepasst werden. Die Neigung ist dabei vorzugsweise horizontal. Die Höhe der Führungsschiene ist vorzugsweise so gewählt, dass die Führungsschiene an der oberen Kante der Wandöffnung angeordnet ist.

Mit Vorteil ist die Haltevorrichtung modular aufgebaut und weist mindestens eine lösbare Befestigungseinrichtung zur Befestigung im Inneren des Windenergieanlagenturms, ein Verbindungselement zur Verbindung mit einer Führungsschiene sowie mindestens einem Kopplungsstück zur Ankopplung einer Hebevorrichtung auf, wobei die Befestigungseinrichtung, das Verbindungselement und das Kopplungsstück durch Kabelelemente miteinander verbunden sind. Diese modular aufgebaute Haltevorrichtung lässt sich durch die Kabelelemente flexibel an verschieden aufgebaute Windenergieanlagentürme anpassen. Vorzugsweise sind als Kabelelemente Hebeschlingen oder Hebebänder zu verwenden. Weiter wird durch die Kabelelemente ermöglicht, die Haltevorrichtung zentral im Windenergieanlagenturm anzuordnen. Damit wird sichergestellt, dass die Haltevorrichtung keine an der Turminnenwand angebrachten Systemkomponenten bei Schwingungsvorgängen beschädigen kann. Mittels der Kabelelemente wird weiter eine Anpassung der Haltevorrichtung an die jeweilige Flanschhöhe und/oder Hubhöhe der zu transportierenden Last ermöglicht, ggf. auch an verschiedene Turmdurchmesser. Mittels Verkürzung oder Verlängerung einzelner Kabelelemente kann die Haltevorrichtung im Turminneren angepasst und zentral ausgerichtet werden. Der modulare Aufbau ermöglicht weiter den einfachen Transport und eine geordnete platzsparende Lagerung der Haltevorrichtung.

Es ist zweckmäßig, die Last vor dem Befestigen an der Führungsschiene mittels einer Hebevorrichtung zu heben. Dabei ist die Hebevorrichtung vorteilhafterweise an der Haltevorrichtung im Turm befestigt. Dies verhindert den Kontakt der Last mit dem Boden, so dass während des Transports keine Reibung zwischen der Last und dem Boden auftreten kann. Weiter kann die Last relativ zur Wandöffnung in einer tieferen Etage gelagert sein, bevor sie an der Führungsschiene angekoppelt wird. Analog kann die Last bei einem Transport in die Windenergieanlage hinein nach dem Erreichen der horizontalen Position innerhalb des Windenergieanlagenturms mittels der Hebevorrichtung in eine tiefere Etage des Turms herabgelassen werden. Die Lagerung der Last ist somit nicht auf die Ebene der Wandöffnung beschränkt. Die Anordnung der Hebevorrichtung an der Haltevorrichtung im Turm ermöglicht eine Entlastung der Führungsschiene während des Hebens der Last.

In einer bevorzugten Ausführungsform ist die Hebevorrichtung in eine modular aufgebaute Haltevorrichtung integriert. Durch den modularen Aufbau der Haltevorrichtung aus den Kabelelementen kann die Hebevorrichtung einfach und schnell in die Haltevorrichtung integriert werden. Weiter kann so eine bifilare Aufhängung in der Haltevorrichtung realisiert sein. Sie ermöglicht eine positionsflexible aber dennoch auch unter Last stabile Aufhängung der Führungsschiene im Turm der Windenergieanlage. Besonders zweckmäßig ist eine doppelstöckige Aufhängung, bei der die untere bifilare Aufhängung quer zur oberen orientiert ist. Damit kann die Position der Haltevorrichtung im Turm in zwei orthogonale Richtungen unabhängig voneinander vorgenommen werden. Es sei angemerkt, dass der Begriff "bi" in bifilar im Kontext dieser Anmeldung im Sinne von mindestens zwei zu verstehen ist.

Zweckmäßigerweise ist in einer ersten vorteilhaften Ausführungsform vorgesehen, ein Zwischenträgermodul zwischen der Hebevorrichtung und der Last zu installieren. Weiter ist mit Vorteil vorgesehen, das Zwischenträgermodul am Führungswagen zu befestigen und anschließend das Zwischenträgermodul von der Hebevorrichtung zu lösen.

In einer zweiten vorteilhaften Ausführungsform ist vorgesehen, das Zwischenträgermodul zwischen dem Führungswagen und der Last zu installieren. Anschließend wird der Führungswagen durch die Wandöffnung bewegt. Innerhalb des Turms wird das Zwischenträgermodul an der Hebevorrichtung befestigt. Danach wird das Zwischenträgermodul von dem Führungswagen gelöst.

Das Zwischenträgermodul weist dazu vorteilhafterweise ein erstes Kopplungselement zur Kopplung an den Führungswagen, ein zweites Kopplungselement zur Kopplung an die Hebevorrichtung und ein drittes Kopplungselement zur Kopplung an die Last auf. Das Zwischenträgermodul bildet ein Übergangsteil zwischen der Last und der Hebevorrichtung bzw. dem Führungswagen. Die Last braucht keine auf die Hebevorrichtung und den Führungswagen abgestimmte Kopplungselemente aufzuweisen. Damit können auch bereits bestehende Lasten mit dem erfindungsgemäßen Verfahren transportiert werden. Das Zwischenträgermodul ermöglicht eine flexible Handhabung des Verfahrens an verschiedenen Lasten. Es ist lediglich nötig, ein entsprechendes Zwischenträgermodul an die Last anzupassen. Die ist mit wenig Aufwand und kostengünstig möglich.

Die Führungsschiene ist vorteilhafterweise als Doppel-T-Träger ausgebildet. Weiter ist der Führungswagen mit Vorteil als Haspelfahrwerk ausgebildet.

Die Erfindung bezieht sich weiter auf eine Haltevorrichtung für eine Führungsschiene zur Installation in einem Windenergieanlagenturm umfassend mindestens eine Befestigungseinrichtung zur Befestigung im Inneren des Windenergieanlagenturms, ein Verbindungselement zur Verbindung mit einer Führungsschiene sowie mindestens einem Kopplungsstück zur Ankopplung einer Hebevorrichtung, wobei die Befestigungseinrichtung, das Verbindungselement und das Kopplungsstück durch Kabelelemente miteinander verbunden sind und wobei die Haltevorrichtung zur Durchführung des oben genannten Verfahrens ausgebildet ist. Die Haltevorrichtung ist wie vorstehend beschrieben zweckmäßigerweise in Hängebauweise ausgeführt.

Die Erfindung erstreckt sich ferner auf ein entsprechendes Schwerlastwechselsystem, insbesondere für Transformatoren von Windenergieanlagen.

Weitere Einzelheiten und Weiterbildungen ergeben sich gemäß der oben angeführten Beschreibung.

Die Erfindung wird nachfolgend unter Bezugnahme auf die beigefügte Zeichnung erläutert, in der ein vorteilhaftes Ausführungsbeispiel der Erfindung dargestellt ist. Es zeigen:
- Fig. 1:: eine schematische Darstellung einer Führungsschiene in einer Wandöffnung eines Windenergieanlagenturms;

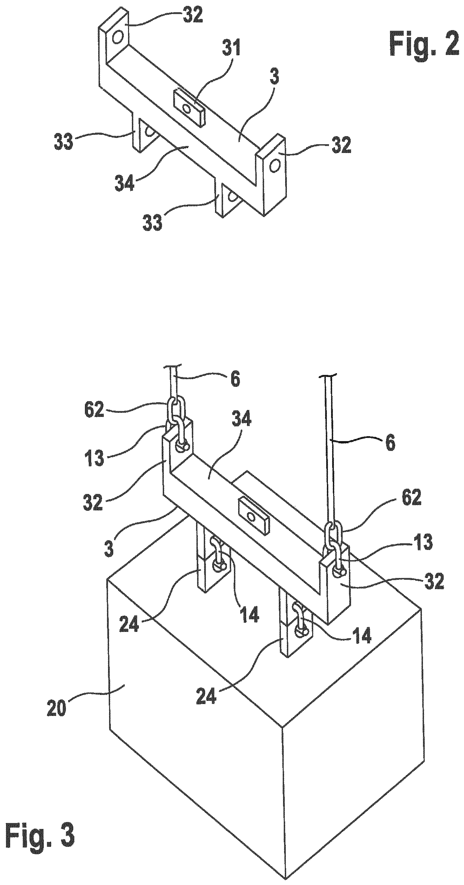

- Fig. 2:: eine schematische Darstellung eines Zwischenträgermoduls;
- Fig. 3:: eine schematische Darstellung eines mit einer Last und einer Hebevorrichtung verbundenen Zwischenträgermoduls; und

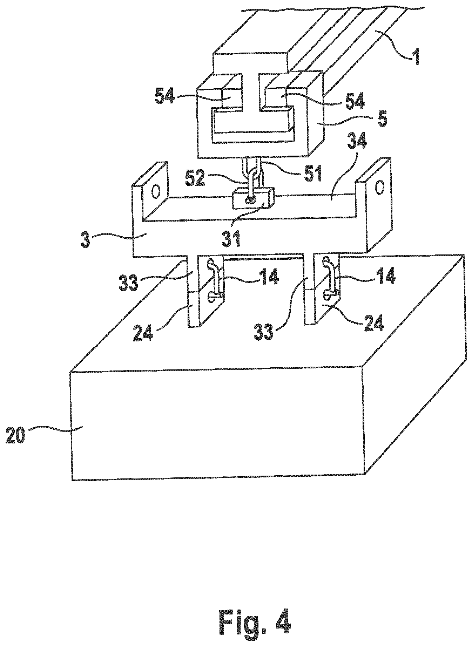

- Fig. 4:: eine schematische Darstellung eines mit einer Last und einem Führungswagen verbundenen Zwischenträgermoduls.

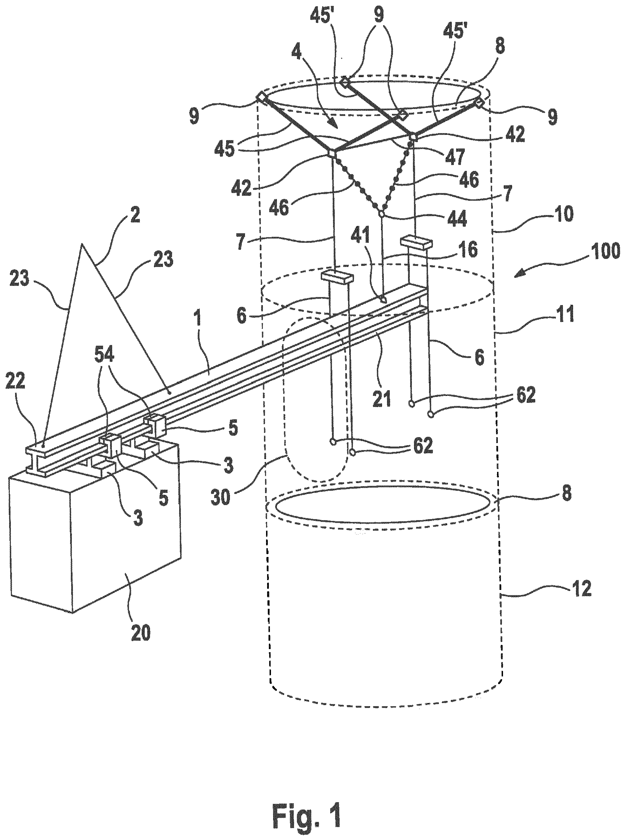

Die Erfindung wird am Beispiel eines Windenergieanlagenturms 100 erläutert, der aus mehreren übereinander angeordneten Turmsegmenten 10, 11, 12 aufgebaut ist. In Figur 1 ist ein Windenergieanlagenturm 100 mit Strichlinien dargestellt, um Komponenten in seinem Inneren sichtbar zu machen.

Das Turmsegment 11 weist eine Wandöffnung 30 auf, die als Zutrittsöffnung in den Windenergieanlagenturm 100 fungiert. Die Wandöffnung 30 ist so dimensioniert, dass eine Last 20 an einer Führungsschiene 1 durch sie geführt werden kann. Die Turmsegmente 10, 11, 12 sind durch Flanschverbindungen 8 miteinander verbunden. In Figur 1 ist zwischen den Turmsegmenten 10 und 11 die Flanschverbindung 8 der besseren Übersicht halber nicht dargestellt.

Im Inneren des Windenergieanlagenturms 100 ist eine modular in Hängebauweise aufgebaute Haltevorrichtung 4 von der Flanschverbindung 8 des Turmsegmentes 10 abgehängt. Dazu sind Befestigungseinrichtungen 9 mit der Flanschverbindung 8 lösbar verbunden. Die Befestigungseinrichtungen 9 können als eine Kombination aus einem Anschlussbolzen und einer Ringschraube ausgeführt sein, die in Durchführungen der Flanschverbindung 8 angeordnet sind. Die Haltevorrichtung 4 ist von den Befestigungseinrichtungen 9 abgehängt verbunden. Weiter umfasst die Haltevorrichtung 4 zwei Kopplungsstücke 42, an denen je eine Hebevorrichtung 6 angekoppelt werden kann. Die Hebevorrichtungen 6 weisen Halteelemente 62 zur Befestigung einer Last 20 auf, beispielsweise eines Transformators 20. Weiter kann die Hebevorrichtung 6 als elektrische Zugwinde oder als Handkettenzug ausgeführt sein.

Um die Hebevorrichtungen 6 über einer im Windenergieanlagenturm 100 gelagerten Last 20 zu positionieren, ist jedes Kopplungsstück 42 über eine bifilare Aufhängung 45, 45' (mit fetter Linie in Fig. 1 dargestellt) aus je zwei Kabelelementen an der Flanschverbindung 8 aufgehängt. Durch unterschiedliche Längen der beiden bifilaren Aufhängungen 45, 45' und unterschiedliche Positionierung der Befestigungseinrichtungen 9 an der Flanschverbindung 8 können die Kopplungsstücke 42, mit denen die Hebevorrichtungen 6 verbunden sind, flexibel positioniert werden. Die beiden Kopplungsstücke 42 sind zur Stabilisierung der Haltevorrichtung 4 über eine druckfeste Koppelstange 47 miteinander verbunden. Zwischen den Kopplungsstücken 42 ist ein Haltemodul 44 angeordnet, das über eine weitere bifilare Aufhängung 46 (mit fetter punktierter Linie in Fig. 1 dargestellt) mit den Kopplungsstücken 42 verbunden ist. Die Positionierung des Haltemoduls 44 kann durch die Wahl der Länge dieser unteren bifilaren Aufhängung 46 verändert werden. Es ist somit eine doppelstöckige bifilare Aufhängung gebildet, wobei die untere bifilare Aufhängung 46 quer ausgerichtet ist zur oberen bifilaren Aufhängung 45, 45'. An dem Haltemodul 44 hängt ein verstellbares Kabelelement 16, an dessen unterem Ende ein Verbindungselement 41 befestigt ist. Das Kabelelement 16 kann in seiner Länge verändert werden, um die Höhe, in der das Verbindungselement 41 angeordnet ist, zu verändern. An dem Verbindungselement 41 ist eine Führungsschiene 1 befestigt.

Die Führungsschiene 1 ragt durch die Wandöffnung 30 aus dem Windenergieanlagenturm 100 hinaus. Die im Windenergieanlagenturm 100 angeordnete Hälfte der Führungsschiene 1 ist mit dem Bezugszeichen 21 gekennzeichnet. Die außerhalb des Windenergieanlagenturms 100 angeordnete Hälfte der Führungsschiene 1 ist mit dem Bezugszeichen 22 gekennzeichnet. Die Führungsschiene 1 ist als Doppel-T-Träger ausgebildet, wobei die Flansche des Doppel-T-Trägers oben und unten angeordnet sind. Außerhalb des Windenergieanlagenturms 100 wird die Führungsschiene 1 von einer Tragvorrichtung 2 getragen. Die Tragvorrichtung 2 ist als Kran ausgebildet und weist zwei Halteseile 23 auf, an denen die Führungsschiene 1 hängend verbunden ist.

Der untere Flansch des Doppel-T-Trägers wird von einem Führungswagen 5 umgriffen. Der Führungswagen 5 ist als Haspelfahrwerk ausgebildet. Der Führungswagen 5 kann entlang der Führungsschiene 1 bewegt werden. Dazu ist vorzugsweise ein Haspelfahrwerk vorzugsweise mit elektrischer Betätigung vorgesehen, das eine Zahnstange oder umlaufende Seiltrume zur sicheren Lastpositionierung umfasst. Weiter weist der Führungswagen 5 an seinem unteren Ende ein Anhängestück 51 auf, an dem die Last 20 angehängt werden kann. Um den Führungswagen 5 an der Führungsschiene 1 unbeweglich zu lagern, ist eine Feststellvorrichtung 54 vorgesehen. Die Feststellvorrichtung 54 blockiert den Führungswagen 5 und befestigt ihn an der Führungsschiene 1.

Zum Anhängen der Last 20 an den Führungswagen 5 und der Hebevorrichtung 6 ist ein Zwischenträgermodul 3 vorgesehen. Das Zwischenträgermodul 3 weist ein erstes Kopplungselement 31 zur Kopplung an den Führungswagen 5, ein zweites Kopplungselement 32 zur Kopplung an die Hebevorrichtung 6 und ein drittes Kopplungselement 33 zur Kopplung an die Last 20 auf. Die Kopplungselemente 31, 32, 33 sind an einem Steg 34 befestigt. Die Last 20 weist Haltestücke 24 auf, mittels der die Last 20 mit Hebevorrichtungen 6 oder mit einem Zwischenträgermodul 3 verbunden werden kann. Der Abstand der dritten Kopplungselemente 33 des Zwischenträgermoduls 3 am Steg 34 entspricht dem Abstand der Haltestücke 24 an der Last 20.

Die Befestigung der Last 20 an dem Zwischenträgermodul 3 wird durch Befestigungsvorrichtungen 14 hergestellt. Die Befestigungsvorrichtungen 14 können als Schäkel ausgebildet sein, die das Haltestück 24 mit dem dritten Kopplungselement 33 verbinden.

Die Befestigung des zweiten Kopplungselements 32 des Zwischenträgermoduls 3 mit dem Halteelement 62 der Hebevorrichtung 6 wird durch eine Befestigungsvorrichtung 13 durchgeführt. Die Befestigung des ersten Kopplungselements 31 mit dem Anhängestück 51 wird über eine Befestigungsvorrichtung 52 hergestellt. Die Befestigungsvorrichtungen 13, 52 können als Schäkel ausgebildet sein.

Das Verfahren zum Lastentransport in einen Windenergieanlagenturm 100 wird am Beispiel eines Tauschs eines Transformators als Last 20 erläutert. Die Last 20 ist dazu in dem unteren Turmsegment 12 angeordnet, so dass sie auf die Höhe der Wandöffnung 30 angehoben werden muss.

In einem ersten Schritt wird die Haltevorrichtung 4 montiert. Zur Montage der Haltevorrichtung 4 müssen ggf. zunächst Bodendeckel an den jeweiligen Plattformen (nicht dargestellt) in dem Windenergieanlagenturm 100 demontiert werden. Dann werden die Befestigungseinrichtungen 9 an die Flanschverbindung 8 am oberen Ende des Turmsegments 10 installiert. An die Befestigungseinrichtungen 9 werden die bifilaren Aufhängungen 45, 45' mit den Kopplungsstücken 42 und die untere bifilare Aufhängung 46 mit dem Haltemodul 44 montiert. An das Haltemodul 44 wird das längenverstellbare Kabelelement 16 mit dem Verbindungselement 41 befestigt.

Danach wird außerhalb des Windenergieanlagenturms 100 eine Hälfte 22 der Führungsschiene 1 an eine Tragvorrichtung 2 gehängt, wobei die Führungsschiene durch Montage von Gegengewichten (nicht dargestellt) ausbalanciert wird. Die andere Hälfte 21 der Führungsschiene 1 wird durch die Wandöffnung 30 des Windenergieanlagenturms 100 geführt. Dabei wird die Führungsschiene 100 am oberen Rand der Wandöffnung 30 angeordnet. An der Führungsschiene 1 sind zwei Führungswagen 5 angeordnet. Die Feststellvorrichtung 54 hält die Führungswagen 5 unbeweglich an der Führungsschiene 1. Innerhalb des Windenergieanlagenturms 100 wird die Führungsschiene 1 mittels des Verbindungselements 41 mit der Haltevorrichtung 4 verbunden, insbesondere dem längenverstellbaren Kabelelement 16, dem Haltemodul 44 und der bifilaren Aufhängung 46. Über das längenverstellbare Kabelelement 16 wird die Neigung der Führungsschiene 1 angepasst. Vorzugsweise wird eine Neigung vermieden, d. h. die Führungsschiene 1 wird waagerecht nivelliert.

Die Feststellvorrichtung 54 der Führungswagen 5 wird gelöst und die Führungswagen 5 werden über die Last 20 positioniert.

An die Haltestücke 24 der Last 20 werden Zwischenträgermodule 3 mittels Schäkeln 14 befestigt. Danach wird die Hebevorrichtung 6 betätigt, so dass die Halteelemente 62 an den Zwischenträgermodulen 3 angeordnet sind. Die Halteelemente 62 werden mittels Schäkeln 13 mit den Zwischenträgermodulen 3 verbunden.

Nach der Verbindung der Halteelemente 62 mit den Zwischenträgermodulen 3 wird die Last 20 mittels der Hebevorrichtung 6 so weit angehoben, dass die Zwischenträgermodule 3 an den Führungswagen 5 angeordnet sind. Danach wird das Anhängestück 51 mittels Schäkeln 52 mit dem Zwischenträgermodul 3 verbunden. Anschließend werden die Schäkel 13 entfernt, so dass die Verbindung zwischen der Haltevorrichtung 6 und dem Zwischenträgermodul 3 gelöst wird.

Die Last 20 wird mittels der Führungswagen 5 entlang der Führungsschiene 1 auf die gegenüberliegende Seite der Wandöffnung 30 transportiert, bis die Last 20 symmetrisch unter der Tragvorrichtung 2 angeordnet ist. Danach werden die Feststellvorrichtungen 54 gesetzt. Das längenverstellbare Kabelelement 16 wird gelöst, so dass die Tragvorrichtung 2 die einzige Verbindung mit der Führungsschiene 1 ist. Danach kann die Last 20 aus dem Windenergieanlagenturm 100 ausgefädelt werden, so dass die Last 20 mittels eines Krans auf einem Transportfahrzeug (nicht dargestellt) abgesetzt werden kann. Nach dem Absetzen werden die Schäkel 14 entfernt, so dass die Verbindung zwischen dem Zwischenträgermodul 3 und der Last 20 gelöst wird. Die Last 20 kann anschließend mit dem Transportfahrzeug abtransportiert werden.

In einem weiteren Schritt kann der Transport eines Transformators als Last 20 in den Windenergieanlagenturm 100 hinein erfolgen. An die Last 20 sind bereits Zwischenträgermodule 3 installiert. Die Zwischenträgermodule 3 werden mit den Führungswagen 5 verbunden. Danach wird die Last 20 mittels der Führungswagen 5 entlang der Führungsschiene 1 auf die gegenüberliegende Seite der Wandöffnung 30 in das Innere des Windenergieanlagenturms 100 transportiert. Dort wird die Haltevorrichtung 6 mit den Zwischenträgermodulen 3 verbunden und anschließend die Führungswagen 5 von den Zwischenträgermodulen 3 gelöst. Danach wird die Last 20 an ihren vorgesehenen Lagerort abgesenkt. In einem weiteren Schritt werden die Zwischenträgermodule 3 von der Last 20 gelöst. In einem vorletzten Schritt werden die Führungsschiene 1 und die Haltevorrichtung 4 aus dem Inneren des Windenergieanlagenturms 100 entfernt. Abschließend können die lösbaren Befestigungen 9 entfernt werden.

## Patentansprüche

1. Verfahren zum Lastentransport in einem Turm (100) einer Windenergieanlage mittels einer Führungsschiene (1), wobei der Turm (100) eine Wandöffnung (30) zur Durchführung einer Last (20) umfasst,
umfassend folgende Schritte:
lösbares Anbringen von mindestens einer Befestigungseinrichtung (9) im Inneren des Turms (100);
Anhängen einer Haltevorrichtung (4) im Inneren des Turms (100) an die mindestens eine lösbar angeordnete Befestigungseinrichtung (9);
Anordnen der Führungsschiene (1) in der Wandöffnung (30), wobei eine Hälfte (21) der Führungsschiene (1) innerhalb des Turms (100) von der Haltevorrichtung (4) gehalten wird und die andere Hälfte (22) der Führungsschiene (1) außerhalb des Turms (100) von einer Tragvorrichtung (2) gehalten wird;
Befestigen der Last (20) an der Führungsschiene (1) auf einer Seite der Wandöffnung (30) mittels mindestens eines entlang der Führungsschiene (1) beweglichen Führungswagens (5);
Transportieren der Last (20) auf eine gegenüberliegende Seite der Wandöffnung (30) durch Bewegen des Führungswagens (5).

2. Verfahren nach Anspruch 1,
**gekennzeichnet durch**
Montieren der Haltevorrichtung (4) im Turm (100) vor dem Anordnen der Führungsschiene (1) in der Wandöffnung (30).

3. Verfahren nach den Ansprüchen 1 oder 2,
**dadurch gekennzeichnet, dass**
die Haltevorrichtung (4) im Turm (100) ein Haltemodul (44) mit einem längenveränderlichen Kabelelement (16) aufweist.

4. Verfahren nach einem der vorangegangenen Ansprüche,
**dadurch gekennzeichnet, dass**
die Haltevorrichtung (4) modular aufgebaut ist, wobei sie ein Verbindungselement (41) zur Verbindung mit einer Führungsschiene (1) sowie mindestens einem Kopplungsstück (42) zur Ankopplung einer Hebevorrichtung (6) umfasst, wobei die Befestigungseinrichtung (9), das Verbindungselement (41) und das Kopplungsstück (42) durch Kabelelemente (7) miteinander verbunden sind.

5. Verfahren nach einem der vorangegangenen Ansprüche,
**dadurch gekennzeichnet, dass**
ein Zwischenträgermodul (3) vorgesehen ist, das ein erstes Kopplungselement (31) zur Kopplung an den Führungswagen (5), ein zweites Kopplungselement (32) zur Kopplung an die Hebevorrichtung (6) und ein drittes Kopplungselement (33) zur Kopplung an die Last (20) aufweist.

6. Verfahren nach Anspruch 5,
**gekennzeichnet durch**
Installieren eines Zwischenträgermoduls (3) zwischen der Hebevorrichtung (6) und der Last (20) und anschließendes Heben der Last (20) mittels der Hebevorrichtung (6).

7. Verfahren nach einem der Ansprüche 5 oder 6,
**gekennzeichnet durch**
Befestigen des Zwischenträgermoduls (3) am Führungswagen (5) und anschließendes Lösen des Zwischenträgermoduls (3) von der Hebevorrichtung (6).

8. Verfahren nach Anspruch 5,
**gekennzeichnet durch**
Installieren des Zwischenträgermoduls (3) zwischen dem Führungswagen (5) und der Last (20) und anschließendes Bewegen des Führungswagens.

9. Verfahren nach einem der Ansprüche 5 oder 8,
**gekennzeichnet durch**
Befestigen des Zwischenträgermoduls (3) an der Hebevorrichtung (6) und anschließendes Lösen des Zwischenträgermoduls (3) von dem Führungswagen (5).

10. Haltevorrichtung für eine Lastentransporteinrichtung zur Installation in einem Windenergieanlagenturm (100) mit einem Verbindungselement (41) zur Verbindung mit einer Führungsschiene (1), die so bemessen ist, dass sie mit einer Hälfte innerhalb des Turms (100) und mit ihrer anderen Hälfte durch eine Wandöffnung (30) aus dem Turm (100) herausragt,
**dadurch gekennzeichnet, dass**
die Haltevorrichtung (4) als Hängekonstruktion ausgeführt ist, die von mindestens einer lösbaren Befestigungseinrichtung (9) abgehängt ist, und
die mindestens ein Kopplungsstück (42) zur Ankopplung einer Hebeeinrichtung (6) aufweist.

11. Haltevorrichtung nach Anspruch 10,
**dadurch gekennzeichnet, dass**
eine Mehrzahl von Befestigungseinrichtungen (9) vorgesehen sind, die umlaufend und lösbar am Innern des Turm (100), vorzugsweise an einem Turmsegmente (10, 11) verbindenden Flansch (8), angeordnet sind.

12. Haltevorrichtung nach Anspruch 10 oder 11,
**dadurch gekennzeichnet, dass**
die Haltevorrichtung (4) eine bifilare Aufhängung (45) für das Kopplungsstück (42) aufweist, wobei vorzugsweise mindestens zwei Kopplungsstücke (42) mit je einer bifilaren Aufhängung (45, 45') vorgesehen sind.

13. Haltevorrichtung nach Anspruch 12,
**dadurch gekennzeichnet, dass**
eine doppelstöckige bifilare Aufhängung vorgesehen ist, wobei eine untere bifilare Aufhängung (46) das Verbindungselement (41) bifilar an den Kopplungsstücken (42) aufhängt, die vorzugsweise quer zur oberen orientiert ist.

14. Haltevorrichtung nach Anspruch 12 oder 13,
**dadurch gekennzeichnet, dass**
die Kopplungsstücke (42) über eine druckfeste Koppelstange (47) verbunden sind.

15. Windenergieanlagen-Schwerlastwechselsystem zur mobilen Installation in einem Windenergieanlagenturm (100), insbesondere für Transformatoren von Windenergieanlagen, umfassend
eine Haltevorrichtung (4) im Turm (100), eine Führungsschiene (1), die durch eine Wandöffnung (30) im Turm (100) ragend angeordnet ist, wobei eine Hälfte (21) der Führungsschiene (1) innerhalb des Turms (100) von der Haltevorrichtung (4) gehalten ist und die andere Hälfte (22) der Führungsschiene (1) außerhalb des Turms (100) von einer Tragvorrichtung (2) halterbar ist, und ein Verbindungselement (41) zur Verbindung der Haltevorrichtung (4) mit der Führungsschiene (1),
**dadurch gekennzeichnet, dass**
die Haltevorrichtung (4) nach einem der Ansprüche 10 bis 14 ausgebildet ist.

## Claims

1. Method for load transport in a tower (100) of a wind turbine by means of a guide rail (1), wherein the tower (100) comprises a wall opening (30) for guiding through a load (20),
comprising the following steps:
releasably mounting at least one fastening device (9) in the interior of the tower (100);
suspending a holding device (4) in the interior of the tower (100) onto the at least one releasably arranged fastening device (9);
arranging the guide rail (1) in the wall opening (30), wherein one half (21) of the guide rail (1) is held within the tower (100) by the holding device (4) and the other half (22) of the guide rail (1) is held outside the tower (100) by a carrying device (2) ;
fastening the load (20) to the guide rail (1) on one side of the wall opening (30) by means of at least one guide carriage (5) which is movable along the guide rail (1);
transporting the load (20) onto an opposite side of the wall opening (30) by moving the guide carriage (5).

2. Method according to Claim 1,
**characterized by**
mounting the holding device (4) in the tower (100) before arranging the guide rail (1) in the wall opening (30).

3. Method according to Claims 1 and 2,
**characterized in that**
the holding device (4) in the tower (100) has a holding module (44) with a longitudinally variable cable element (16).

4. Method according to one of the preceding claims,
**characterized in that**
the holding device (4) is of modular design, with it comprising a connecting element (41) for connecting to a guide rail (1) and to at least one coupling piece (42) for coupling a lifting device (6), wherein the fastening device (9), the connecting element (41) and the coupling piece (42) are connected to one another by cable elements (7).

5. Method according to one of the preceding claims,
**characterized in that**
an intermediate carrier module (3) is provided which has a first coupling element (31) for coupling to the guide carriage (5), a second coupling element (32) for coupling to the lifting device (6) and a third coupling element (33) for coupling to the load (20).

6. Method according to Claim 5,
**characterized by**
installing an intermediate carrier module (3) between the lifting device (6) and the load (20) and subsequently lifting the load (20) by means of the lifting device (6).

7. Method according to one of Claims 5 and 6,
**characterized by**
fastening the intermediate carrier module (3) to the guide carriage (5) and subsequently releasing the intermediate carrier module (3) from the lifting device (6).

8. Method according to Claim 5,
**characterized by**
installing the intermediate carrier module (3) between the guide carriage (5) and the load (20) and subsequently moving the guide carriage.

9. Method according to one of Claims 5 and 8,
**characterized by**
fastening the intermediate carrier module (3) to the lifting device (6) and subsequently releasing the intermediate carrier module (3) from the guide carriage (5).

10. Holding device for a load transport device for installation in a wind turbine tower (100), having a connecting element (41) for connecting to a guide rail (1) which is dimensioned such that it projects by one half within the tower (100) and by its other half through a wall opening (30) from the tower (100),
**characterized in that**
the holding device (4) is configured as a suspension construction which is suspended from at least one releasable fastening device (9) and
which has at least one coupling piece (42) for coupling a lifting device (6).

11. Holding device according to Claim 10,
**characterized in that**
a plurality of fastening devices (9) are provided which are arranged peripherally and releasably on the interior of the tower (100), preferably on a flange (8) which connects tower segments (10, 11).

12. Holding device according to Claim 10 or 11,
**characterized in that**
the holding device (4) has a bifilar suspension (45) for the coupling piece (42), wherein preferably at least two coupling pieces (42) are each provided with a bifilar suspension (45, 45').

13. Holding device according to Claim 12,
**characterized in that**
a double-level bifilar suspension is provided, wherein a lower bifilar suspension (46) suspends the connecting element (41) in a bifilar manner on the coupling piece (42) and is preferably oriented transversely to the upper one.

14. Holding device according to Claim 12 or 13,
**characterized in that**
the coupling pieces (42) are connected via a pressure-resistant coupling rod (47).

15. Wind turbine heavy-load replacement system for mobile installation in a wind turbine tower (100), in particular for transformers of wind turbines, comprising
a holding device (4) in the tower (100), a guide rail (1) which is arranged so as to project through a wall opening (30) in the tower (100), wherein one half (21) of the guide rail (1) is held within the tower (100) by the holding device (4) and the other half (22) of the guide rail (1) can be held outside the tower (100) by a carrying device (2), and a connecting element (41) for connecting the holding device (4) to the guide rail (1),
**characterized in that**
the holding device (4) is designed according to one of Claims 10 to 14.

## Revendications

1. Procédé de transport de charge dans une tour (100) d'une éolienne au moyen d'un rail de guidage (1), la tour (100) comprenant une ouverture de paroi (30) pour le passage d'une charge (20),
comprenant les étapes suivantes :
montage, de manière amovible, d'au moins un dispositif de fixation (9) à l'intérieur de la tour (100) ;
accrochage d'un dispositif de retenue (4) à l'intérieur de la tour (100) à l'au moins un dispositif de fixation (9) disposé de manière amovible ;
disposition du rail de guidage (1) dans l'ouverture de paroi (30), une moitié (21) du rail de guidage (1) étant retenue à l'intérieur de la tour (100) par le dispositif de retenue (4) et l'autre moitié (22) du rail de guidage (1) étant retenue à l'extérieur de la tour (100) par un dispositif de support (2) ; fixation de la charge (20) au rail de guidage (1) sur un côté de l'ouverture de paroi (30) au moyen d'au moins un chariot de guidage (5) déplaçable le long du rail de guidage (1) ;
transport de la charge (20) sur un côté opposé de l'ouverture de paroi (30) par déplacement du chariot de guidage (5).

2. Procédé selon la revendication 1,
**caractérisé par**
le montage du dispositif de retenue (4) dans la tour (100) avant de disposer le rail de guidage (1) dans l'ouverture de paroi (30).

3. Procédé selon les revendications 1 ou 2,
**caractérisé en ce que**
le dispositif de retenue (4) dans la tour (100) présente un module de retenue (44) avec un élément de câble (16) de longueur variable.

4. Procédé selon l'une quelconque des revendications précédentes,
**caractérisé en ce que**
le dispositif de retenue (4) est de construction modulaire, comprenant un élément de liaison (41) pour la liaison à un rail de guidage (1) ainsi qu'au moins une pièce d'accouplement (42) pour l'accouplement d'un dispositif de levage (6), le dispositif de fixation (9), l'élément de liaison (41) et la pièce d'accouplement (42) étant reliés les uns aux autres par des éléments de câble (7).

5. Procédé selon l'une quelconque des revendications précédentes,
**caractérisé en ce**
**qu'**un module de support intermédiaire (3) est prévu, lequel présente un premier élément d'accouplement (31) pour l'accouplement au chariot de guidage (5), un deuxième élément d'accouplement (32) pour l'accouplement au dispositif de levage (6) et un troisième élément d'accouplement (33) pour l'accouplement à la charge (20).

6. Procédé selon la revendication 5,
**caractérisé par**
l'installation d'un module de support intermédiaire (3) entre le dispositif de levage (6) et la charge (20) et par le soulèvement subséquent de la charge (20) au moyen du dispositif de levage (6).

7. Procédé selon l'une quelconque des revendications 5 ou 6,
**caractérisé par**
la fixation du module de support intermédiaire (3) au chariot de guidage (5) et le détachement subséquent du module de support intermédiaire (3) du dispositif de levage (6).

8. Procédé selon la revendication 5,
**caractérisé par**
l'installation du module de support intermédiaire (3) entre le chariot de guidage (5) et la charge (20) et le déplacement subséquent du chariot de guidage.

9. Procédé selon l'une quelconque des revendications 5 ou 8,
**caractérisé par**
la fixation du module de support intermédiaire (3) au dispositif de levage (6) et le détachement subséquent du module de support intermédiaire (3) du chariot de guidage (5).

10. Dispositif de retenue pour un dispositif de transport de charge pour l'installation dans une tour d'éolienne (100), comprenant un élément de liaison (41) pour la liaison à un rail de guidage (1), qui est dimensionné de telle sorte qu'il fasse saillie avec une moitié à l'intérieur de la tour (100) et avec son autre moitié à travers une ouverture de paroi (30) hors de la tour (100),
**caractérisé en ce que**
le dispositif de retenue (4) est réalisé sous forme de construction suspendue qui est suspendue par au moins un dispositif de fixation amovible (9), et qui présente au moins une pièce d'accouplement (42) pour l'accouplement d'un dispositif de levage (6).

11. Dispositif de retenue selon la revendication 10,
caractérisé en
qu'une pluralité de dispositifs de fixation (9) sont prévus, lesquels sont disposés sur la périphérie et de manière amovible à l'intérieur de la tour (100), de préférence au niveau d'une bride (8) reliant les segments de tour (10, 11).

12. Dispositif de retenue selon la revendication 10 ou 11,
**caractérisé en ce que**
le dispositif de retenue (4) présente une suspension bifilaire (45) pour la pièce d'accouplement (42), de préférence au moins deux pièces d'accouplement (42) ayant chacune une suspension bifilaire (45, 45') étant prévues.

13. Dispositif de retenue selon la revendication 12,
**caractérisé en ce que**
qu'il est prévu une suspension bifilaire à deux niveaux, une suspension bifilaire inférieure (46) suspendant l'élément de liaison (41) de manière bifilaire aux pièces d'accouplement (42), laquelle suspension bifilaire inférieure étant orientée de préférence transversalement par rapport à celle du dessus.

14. Dispositif de retenue selon la revendication 12 ou 13,
**caractérisé en ce que**
les pièces d'accouplement (42) sont reliées par le biais d'une tige de liaison (47) résistant à la pression.

15. Système de remplacement de charges lourdes sur des éoliennes en vue de l'installation mobile dans une tour d'éolienne (100), en particulier pour des transformateurs d'éoliennes, comprenant un dispositif de retenue (4) dans la tour (100), un rail de guidage (1) qui est disposé de manière à pénétrer dans la tour (100) à travers une ouverture de paroi (30), une moitié (21) du rail de guidage (1) étant retenue à l'intérieur de la tour (100) par le dispositif de retenue (4) et l'autre moitié (22) du rail de guidage (1) pouvant être retenue à l'extérieur de la tour (100) par un dispositif de support (2), et un élément de liaison (41) pour la liaison du dispositif de retenue (4) au rail de guidage (1),
**caractérisé en ce que**
le dispositif de retenue (4) est réalisé selon l'une quelconque des revendications 10 à 14.
